# EUROPÄISCHE PATENTSCHRIFT

(11) **EP 3 847 878 B1**
(45) Veröffentlichungstag und Bekanntmachung des Hinweises auf die Patenterteilung: **14.02.2024**
(21) Anmeldenummer: 20200734.0
(22) Anmeldetag: 08.10.2020
(51) Int. Cl.: A01B 69/04, A01D 41/127, A01D 43/08, G05D 1/02

(54) **VERFAHREN UND SYSTEM ZUM ÜBERLADEN VON ERNTEGUT**
METHOD AND SYSTEM FOR OVERLOADING HARVESTED GOODS
PROCÉDÉ ET SYSTÈME DE TRANSFERT DE RÉCOLTE

(30) Priorität: 09.01.2020 DE 102020100299
(43) Veröffentlichungstag der Anmeldung: 14.07.2021
(73) Patentinhaber: CLAAS E-Systems GmbH, 49201 Dissen (DE)
(72) Erfinder: Kettelhoit, Boris, 33335 Gütersloh (DE); Lücke, Andreas, 49219 Glandorf (DE)
(74) Vertreter: CLAAS Gruppe

(56) Entgegenhaltungen:
- EP-A1- 2 100 495
- WO-A1-2012/110545
- DE-A1- 10 064 862
- DE-A1-102005 047 306
- DE-A1-102007 016 670
- DE-A1-102010 043 854

## Beschreibung

Die Erfindung bezieht sich auf ein Verfahren zum Überladen von Erntegut von einem Erntefahrzeug auf ein Transportfahrzeug.

Aus der WO2012110545 ist ein Verfahren zum Überladen von Erntegut bekannt. Dabei wird ein Referenzpfad aufgezeichnet und dazu parallele Pfade erzeugt. Wenn das Erntefahrzeug einen der Pfade abfährt wird für das Transportfahrzeug ein angepasster Pfad erzeugt. Nachteilig an dem Verfahren ist, dass ein großer Rechenaufwand zur Erzeugung der Pfade erforderlich ist. Weiterer relevanter Stand der Technik ist die DE 100 64 862 A1.

Aufgabe der Erfindung ist es ein vereinfachtes Verfahren bereitzustellen.

Gelöst wird die Aufgabe durch ein Verfahren zum Überladen von Erntegut von einem Erntefahrzeug auf ein Transportfahrzeug, wobei das Erntefahrzeug eine Vielzahl im Wesentlichen paralleler Fahrspuren abfährt, wobei die Fahrspur des Erntefahrzeugs während der Fahrt aufgezeichnet wird, wobei das Erntefahrzeug während der Fahrt Erntegut aufnimmt, wobei das Transportfahrzeug parallel zum Erntefahrzeug gefahren wird und während der Parallelfahrt von Erntefahrzeug und Transportfahrzeug das Erntegut vom Erntefahrzeug auf das Transportfahrzeug überladen wird, wobei die aufgezeichnete Fahrspur dem Transportfahrzeug übermittelt wird, wobei das Transportfahrzeug im Wesentlichen entlang der übermittelten Fahrspur gefahren wird.

Erfindungsgemäß wird die vom Erntefahrzeug aufgezeichnete Fahrspur direkt als Vorgabespur für das Transportfahrzeug genutzt. Es entfällt der Aufwand für das Transportfahrzeug eigene Fahrspuren zu berechnen. Da das Erntefahrzeug parallele Fahrspuren abfährt ist dadurch die Vorgabespur für das Transportfahrzeug parallel zur Fahrspur des Erntefahrzeugs. Unter einer Parallelfahrt von Erntefahrzeug und Transportfahrzeug wird im Sinne der Erfindung verstanden, dass beide Fahrzeug im Wesentlichen nebeneinander fahren. Die Geschwindigkeiten der Fahrzeuge werden also aneinander angeglichen. Falls das Erntefahrzeug die aktuelle Fahrspur in umgekehrter Richtung zur Vorgabespur des Transportfahrzeugs befährt, so fährt das Transportfahrzeug die Vorgabespur in umgekehrter Richtung ab.

In einer vorteilhaften Ausgestaltung überwacht ein Überwachungssystem die Relativposition von Erntefahrzeug und Transportfahrzeug, wobei das Überwachungssystem eine Geschwindigkeitsänderungsvorgabe an das Erntefahrzeug und/oder das Transportfahrzeug ausgibt, wenn die Parallelität von Erntefahrzeug und Transportfahrzeug um mehr als einen vorgegebenen Grenzwert abweicht. Das Überwachungssystem kann bspw. ein Kamerasystem an dem Erntefahrzeug umfassen, wobei das Kamerasystem die Relativgeschwindigkeit des Transportfahrzeugs ermittelt. Alternativ können die Geschwindigkeiten der beiden Fahrzeuge, bspw. mittels GNSS-Empfänger auf den Fahrzeugen, ermittelt und verglichen werden. Weitere Möglichkeiten sind die Ermittlungen der Geschwindigkeiten aus den Radgeschwindigkeiten und Durchmessern oder Radarmessungen zur Bestimmung der Relativgeschwindigkeit. Die Richtung der Geschwindigkeit wird bevorzugt direkt aus der Messung bestimmt. Alternativ kann die Richtung mit Trägheitssensoren oder aus Lenkwinkelsensoren bestimmt werden.

In einer Ausgestaltung ist das Erntefahrzeug mit einem Ortsbestimmungssystem, bevorzugt einem GNSS-Empfänger, ausgestattet und aus den vom Ortsbestimmungssystem bestimmten Ortsdaten die Fahrspur generiert wird. Das Ortsbestimmungssystem bestimmt in regelmäßigen oder unregelmäßigen Abständen die aktuelle Position des Erntefahrzeugs. Aus der Liste der Ortspositionen wird dann die Fahrspur generiert. Die Fahrspur kann direkt aus den Ortspositionen generiert werden oder aus einer Interpolation. Eine Interpolation glättet die Fahrspur und gleicht Ungenauigkeiten der Ortsbestimmungen aus. Ungewöhnliche Fahrmanöver wie ein kurzes Rückwärtsfahren bspw. wegen einer Verstopfung eines Arbeitsaggregates der Erntemaschine können bei der Generierung der Fahrspur entfernt werden.

In einer vorteilhaften Ausgestaltung vergleicht das Ortsbestimmungssystem die aktuelle Fahrspur mit einer übermittelten Fahrspur und gibt eine Warnung aus, wenn die Parallelität der aktuellen Fahrspur von der übermittelten Fahrspur um mehr als einen vorbestimmten Grenzwert abweicht. Wenn die aktuelle Fahrspur nicht parallel zur übermittelten Fahrspur ist, fährt das Transportfahrzeug nicht parallel zum Erntefahrzeug. Wird die Abweichung zu groß, so ist ein Überladen des Ernteguts nicht möglich.

Da die Fahrspur des Transportfahrzeugs bekannt ist, nämlich die übermittelte Fahrspur, ist eine Überwachung des Abstandes zwischen den Fahrzeugen nicht notwendig. Wenn das Erntefahrzeug nicht parallel zur übermittelten Fahrspur fährt ist dies gleichbedeutend mit einem fehlerhaften Abstand zum Transportfahrzeug. Dadurch kann ein Abstandmesssystem zur Abstandskontrolle zwischen den Fahrzeugen eingespart werden.

In einer vorteilhaften Ausgestaltung umfasst das Transportfahrzeug ein Ortsbestimmungssystem und ein automatisiertes Lenksystem, wobei das Lenksystem das Transportfahrzeug entlang der übermittelten Fahrspur lenkt. Das Ortbestimmungssystem überprüft ob sich das Transportfahrzeug auf der übermittelten Fahrspur befindet und gibt bei einer Abweichung entsprechende Signale an das Lenksystem ab. Das Lenksystem kann das Transportfahrzeug so automatisiert entlang der übermittelten Fahrspur lenken. Der Fahrer des Transportfahrzeugs wird dadurch entlastet.

In einer alternativen Ausgestaltung umfasst das Transportfahrzeig ein Ortsbestimmungssystem und die übermittelte Fahrspur wird einem Fahrer des Transportfahrzeugs visuell angezeigt. Das Ortbestimmungssystem überprüft ob sich das Transportfahrzeug auf der übermittelten Fahrspur befindet und zeigt bei einer Abweichung dem Fahrer an wie er lenken muss um der übermittelten Fahrspur zu folgen.

In einer vorteilhaften Ausgestaltung wird das Transportfahrzeug im Wesentlichen abweichungslos in der Fahrspur des Erntefahrzeugs gefahren. Durch das Fahren des Erntefahrzeugs in der Fahrspur des Erntefahrzeugs wird der Boden nur in einer Fahrspur verdichtet und nicht in zwei Fahrspuren von Erntefahrzeug und Transportfahrzeug getrennt. Das schont den Boden und es wird weniger Aufwand zur Lockerung des Bodens notwendig.

In einer alternativen Ausgestaltung wird die aufgezeichnete Fahrspur vor der Übermittlung an das Transportfahrzeug um einen Offset quer zur Fahrtrichtung versetzt. Die Versetzung um einen Offset kann notwendig sein, wenn die Abstände zwischen den parallelen Fahrspuren kein Überladen von Erntegut ermöglichen. Das Addieren eines Offsets ermöglicht die Nutzung der aufgezeichneten Fahrspur mit minimalem Aufwand.

In einer Weiterbildung umfass das Erntefahrzeug ein Arbeitsaggregat mit einer Arbeitsbreite und eine Überladevorrichtung mit einer Überladeentfernung, wobei der Offset aus einer Differenz der Arbeitsbreite und der Überladeentfernung bestimmt wird. Die Arbeitsbreite bestimmt die Abstände zwischen den parallelen Fahrspuren. Die Überladeentfernung bestimmt den Abstand zwischen Transportfahrzeug und Erntefahrzeug. Falls die Arbeitsbreite nicht der Überladeentfernung entspricht, wird der Offset um den die Fahrspur versetzt werden muss aus der Differenz von Arbeitsbreite und Überladeentfernung bestimmt werden. Die Bestimmung des Offsets geschieht vorzugsweise automatisch auf dem Erntefahrzeug, dadurch sind auf dem Transportfahrzeug keine Informationen über die Arbeitsbreite oder die Überladeentfernung notwendig.

Die Erfindung betrifft auch ein System zum Überladen von Erntegut, bestehend aus einem Erntefahrzeug und einem Transportfahrzeug, wobei das Erntefahrzeug und das Transportfahrzeug mit einem Ortsbestimmungssystem, bevorzugt einem GNSS-Empfänger, ausgestattet sind, wobei das Ortsbestimmungssystem des Erntefahrzeugs dazu vorgesehen und eingerichtet ist eine Fahrspur des Erntefahrzeugs aufzuzeichnen, wobei das Erntefahrzeug mit einer Überladevorrichtung ausgestattet ist, wobei die Überladevorrichtung dazu vorgesehen und eingerichtet ist während einer Parallelfahrt von Erntefahrzeug und Transportfahrzeug Erntegut vom Erntefahrzeug zum Transportfahrzeug zu überladen, wobei das Erntefahrzeug und das Transportfahrzeug mit jeweils einem Kommunikationssystem ausgestattet sind, wobei die Kommunikationssysteme dazu vorgesehen und eingerichtet sind die aufgezeichnete Fahrspur an das Transportfahrzeug zu übermitteln, wobei das Ortsbestimmungssystem des Transportfahrzeugs dazu vorgesehen und eingerichtet ist ein Abweichung eine aktuellen Position des Transportfahrzeugs von der übermittelten Fahrspur zu erkennen und auszugeben.

Das System ermöglicht eine besonders einfache Steuerung des Transportfahrzeugs entlang der Fahrspur des Erntefahrzeugs.

In einer Ausgestaltung ist das Erntefahrzeug ein Mähdrescher oder ein Feldhäcksler.

In einer Weiterbildung umfasst das Transportfahrzeug ein automatisiertes Lenksystem, wobei das Lenksystem mit dem Ortsbestimmungssystem des Transportfahrzeugs verbunden ist, wobei die Ausgabe des Ortsbestimmungssystems des Transportfahrzeugs an das Lenksystem weitergeleitet wird. Das Lenksystem kann durch die Verbindung zum Ortsbestimmungssystem das Transportfahrzeug automatisiert entlang der übermittelten Fahrspur lenken.

Die Erfindung wird im Folgenden an Ausführungsbeispielen näher erläutert. Dabei zeigt
Fig 1 ein Verfahren mit mäandernden Fahrspuren,
Fig 2 ein Verfahren mit spiralförmigen Fahrspuren,
Fig 3 ein erfindungsgemäßes System.

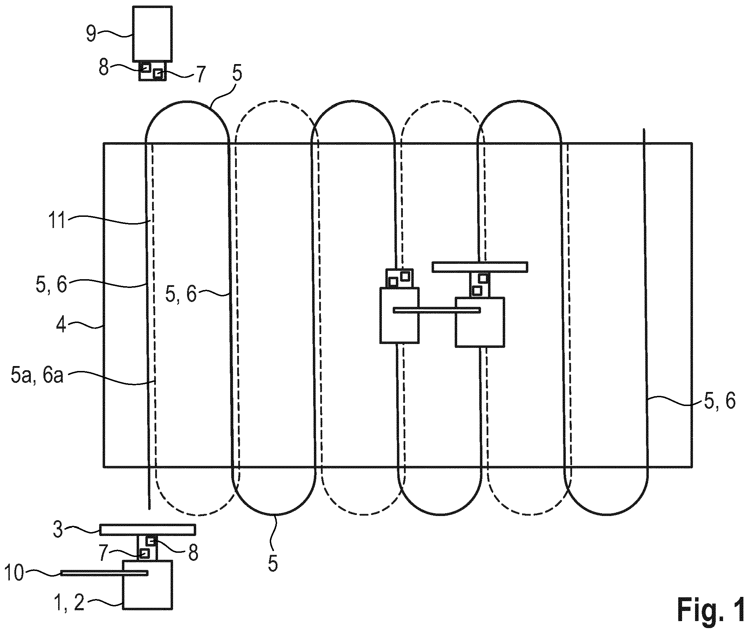

Fig 1 zeigt ein Erntefahrzeug 1, in diesem Beispiel einen Feldhäcksler 2. Der Feldhäcksler 2 ist mit einer Erntevorrichtung 3 ausgestattet und erntet ein Feld 4 in mäandernden Fahrspuren 5 ab. Die Fahrspuren 5 müssen dabei nicht vor der Fahrt feststehen. Die Fahrspuren 5 sind in diesem Beispiel in dem Bereich des Feldes 4 jeweils eine Gerade 6. Im Bereich des Vorgewendes wendet der Feldhäcksler 2. Die geraden Fahrspuren 6 sind dabei parallel zueinander, wobei der Abstand zwischen den geraden Fahrspuren 6 der Arbeitsbreite der Erntevorrichtung 3 entspricht.

Der Feldhäcksler 2 ist mit einem Ortsbestimmungssystem 7 ausgestattet. Das Ortsbestimmungssystem 7 zeichnet die Fahrspuren des Feldhäcksler 2 auf. Die geraden Fahrspuren 6 werden mittels eines Kommunikationssystem 8 vom Feldhäcksler 2 zu einem Transportfahrzeug 9 übertragen. Da in diesem Beispiel die Länge der Überladevorrichtung 10 des Feldhäcksler 2 nicht der Arbeitsbreite der Erntevorrichtung 3 entspricht wird die aufgezeichnete Fahrspur vor der Übermittlung an das Transportfahrzeug 9 um einen Offset 11 quer zur Fahrtrichtung versetzt. Das Transportfahrzeug 9 fährt entlang der übertragenen geraden Fahrspuren 6a parallel zum Feldhäcksler 2.

Würde die Überladeentfernung der Überladevorrichtung 10 der Arbeitsbreite der Erntevorrichtung 3 entsprechen, würde auf den Offset verzichtet werden und das Transportfahrzeug 9 würde die selben geraden Fahrspuren 6 nutzen wie das Erntefahrzeug 1.

In der ersten geraden Fahrspur 6 überlädt der Feldhäcksler 2 das Erntegut nach hinten, da neben ihm kein Platz ist. Ab der zweiten geraden Fahrspur 6 fährt ein Transportfahrzeug 9 jeweils parallel zum Feldhäcksler 2 auf der jeweils davor abgeernteten geraden Fahrspur 6a neben dem Feldhäcksler 2 und der Feldhäcksler 2 überlädt das Erntegut auf das Transportfahrzeug 9. Da der Feldhäcksler 2 die geraden Fahrspuren 6 in abwechselnden Richtungen befährt, fährt das Transportfahrzeug 9 die Fahrspuren 6a in der jeweils anderen Richtung ab.

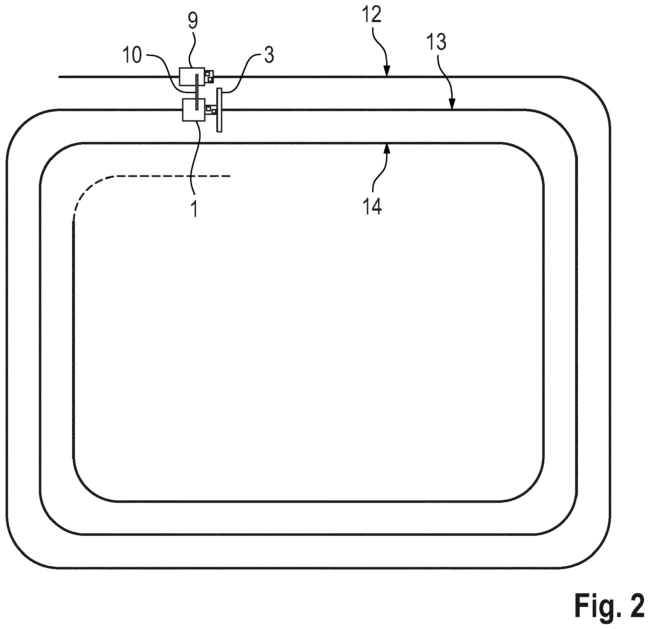

Fig 2 zeigt ein Erntefahrzeug 1, das ein Feld 4 in spiralförmigen Fahrspuren 12, 13, 14 aberntet. Nach der ersten Umrundung des Feldes 4 wird die zweite Fahrspur 13 parallel zur ersten Fahrspur 12 im Abstand der Arbeitsbreite der Erntevorrichtung 3 gefahren. Ein in der ersten Fahrspur 12 fahrendes Transportfahrzeug 9 fährt parallel zum Erntefahrzeug 1 während das Erntefahrzeug 1 das Erntegut mittels der Überladevorrichtung 10 überlädt.

Ebenso wie in Figur 1 zeichnet ein Ortsbestimmungssystem 7 die Fahrspur 12 des Erntefahrzeugs 1 auf. Die aufgezeichnete Fahrspur wird mittels eines Kommunikationssystem 8 vom Erntefahrzeug 1 zum Transportfahrzeug 9 übertragen. Das Transportfahrzeug 9 folgt der übertragenen Fahrspur mittels eines Ortsbestimmungssystem 7 und eines automatischen Lenksystems.

In diesem Beispiel entspricht die Überladeentfernung der Überladevorrichtung 10 der Arbeitsbreite der Erntevorrichtung 3. Da das Transportfahrzeug 9 in derselben Fahrspur 12 fährt wie zuvor das Erntefahrzeug 1 wird der Boden nur dort verdichtet und ein großer Teil des Feldes 4 geschont.

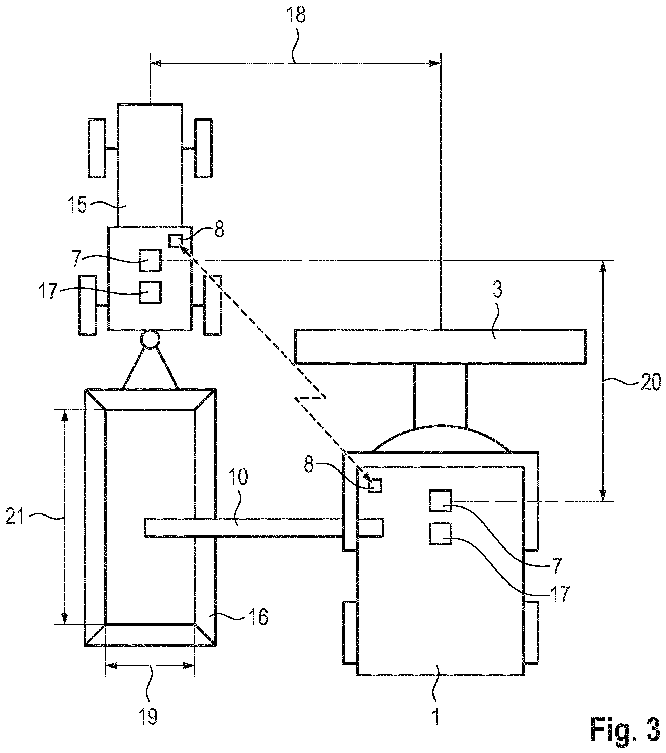

Das in Fig 3 gezeigte erfindungsgemäße System besteht aus einem Erntefahrzeug 1 und einem Transportfahrtzeug 9, welches in diesem Beispiel ein Traktor 15 mit einem Anhänger 16 ist. Das Erntefahrzeug 1 ist mit einem Ortsbestimmungssystem 7 ausgestattet. Das Ortsbestimmungssystem 7 umfasst einen GNSS-Empfänger und bestimmt in regelmäßigen Abständen die aktuelle Position des Erntefahrzeugs 1. Aus einer Vielzahl von Positionen generiert das Ortsbestimmungssystem 7 die Fahrspur 5 des Erntefahrzeugs 1 und zeichnet die Fahrspur 5 auf. Das Erntefahrzeug 1 umfasst ein Kommunikationssystem 7 mit dem die Fahrspur 5 an ein Kommunikationssystem 8 des Traktors 15 übermittelt wird. Der Traktor 15 kann dadurch die Fahrspur 5 Erntefahrzeug 1 entlangfahren.

Das Erntefahrzeug 1 ist mit einer Erntevorrichtung 3 ausgestattet. Mit der Erntevorrichtung 3 wird Erntegut vom Feld geerntet und vom Erntefahrzeug 1 aufgenommen. Das Erntefahrzeug 1 ist mit einer Überladevorrichtung 10 ausgestattet. Mittels der Überladevorrichtung 10 wird Erntegut vom Erntefahrzeug 1 auf den Anhänger 16 überladen.

Das Erntefahrzeug 1 ist mit einem automatisierten Lenksystem 17 ausgestattet. Mit dem automatisierten Lenksystem 17 kann das Erntefahrzeug 1 einer vorgegebene Fahrspur 5 folgen. Es sei angemerkt, dass die vorgegebene Fahrspur des Erntefahrzeugs 1 nicht der mit dem Ortsbestimmungssystem 7 aufgezeichneten Fahrspur entsprechen muss. An das Transportfahrzeug wird die aufgezeichnete Fahrspur übermittelt und nicht die vorgegebene Fahrspur.

Das Transportfahrzeug 9 ist ebenfalls mit einem automatisierten Lenksystem 17 ausgestattet. Mit dem automatisierten Lenksystem 17 kann das Transportfahrzeug 9 der vom Erntefahrzeug 1 übertragenen Fahrspur 5 folgen.

Der Abstand 18 zwischen den Fahrzeugen entspricht vorteilhafter Weise der Überladeentfernung der Überladevorrichtung 10. Der Abstand 18 zwischen den Fahrzeugen variiert vorteilhafter Weise nicht mehr als die Breite 19 der Aufnahmeöffnung des Transportfahrzeugs 9. Entspricht der Abstand 18 zwischen den Fahrzeugen der Breite der Erntevorrichtung 3, so fährt das Transportahrzeug 9 im Wesentlichen abweichungslos in einer früheren Fahrspur des Erntefahrzeugs 1.

Die Längsverschiebung 20 zwischen Transportfahrzeug 9 und Erntefahrzeug 1 ergibt sich aus den Abständen zwischen dem Empfänger des Ortsbestimmungssystems 7 am Transportfahrzeug 9 und der Mitte der Aufnahmeöffnung einerseits und dem Empfänger des Ortsbestimmungssystem 7 am Erntefahrzeug 1 und der Überladevorrichtung 10 andererseits. Die Längsverschiebung 20 variiert vorteilhafter Weise nicht mehr als die Länge 21 der Aufnahmeöffnung des Transportfahrzeugs 9.

### Bezugszeichenliste

- **1**: **Erntefahrzeug**
- **2**: **Feldhäcksler**
- **3**: **Erntevorrichtung**
- **4**: **Feld**
- **5, 5a**: **Fahrspur**
- **6, 6a**: **Parallele Fahrspuren**
- **7**: **Ortsbestimmungssystem**
- **8**: **Kommunikationssystem**
- **9**: **Transportfahrzeug**
- **10**: **Überladevorrichtung**
- **11**: **Offset**
- **12**: **Erste Fahrspur**
- **13**: **Zweite Fahrspur**
- **14**: **Dritte Fahrspur**
- **15**: **Traktor**
- **16**: **Anhänger**
- **17**: **Automatisiertes Lenksystem**
- **18**: **Fahrzeugabstand**
- **19**: **Breite der Aufnahmeöffnung**
- **20**: **Längsverschiebung**
- **21**: **Länge der Aufnahmeöffnung**

## Patentansprüche

1. Verfahren zum Überladen von Erntegut von einem Erntefahrzeug (1) auf ein Transportfahrzeug (9),
wobei das Erntefahrzeug (1) eine Vielzahl im Wesentlichen paralleler Fahrspuren (6) abfährt,
wobei die Fahrspur (6) des Erntefahrzeugs (1) während der Fahrt aufgezeichnet wird,
wobei das Erntefahrzeug (1) während der Fahrt Erntegut aufnimmt,
wobei das Transportfahrzeug (9) parallel zum Erntefahrzeug (1) gefahren wird und während der Parallelfahrt von Erntefahrzeug (1) und Transportfahrzeug (9) das Erntegut vom Erntefahrzeug (1) auf das Transportfahrzeug (9) überladen wird,
**dadurch gekennzeichnet, dass** die aufgezeichnete Fahrspur (6) dem Transportfahrzeug (9) übermittelt wird,
wobei das Transportfahrzeug (9) im Wesentlichen entlang der übermittelten Fahrspur (6) gefahren wird.

2. Verfahren nach Anspruch 1, **dadurch gekennzeichnet, dass** ein Überwachungssystem die Relativosition von Erntefahrzeug (1) und Transportfahrzeug (9) überwacht, wobei das Überwachungssystem eine Geschwindigkeitsänderungsvorgabe an das Erntefahrzeug (1) und/oder das Transportfahrzeug (9) ausgibt, wenn die Parallelität von Erntefahrzeug (1) und Transportfahrzeug (9) um mehr als einen vorgegebenen Grenzwert abweicht.

3. Verfahren nach einem der vorhergehenden Ansprüche, **dadurch gekennzeichnet, dass** das Erntefahrzeug mit einem Ortsbestimmungssystem(7), bevorzugt einem GNSS-Empfänger, ausgestattet ist und aus den vom Ortsbestimmungssystem (7) bestimmten Ortsdaten die Fahrspur (5, 6) generiert wird.

4. Verfahren nach Anspruch 3, **dadurch gekennzeichnet, dass** das Ortsbestimmungssystem (7) die aktuelle Fahrspur (6) mit einer übermittelten Fahrspur (6a) vergleicht und eine Warnung ausgibt, wenn die Parallelität der aktuellen Fahrspur (6) von der übermittelten Fahrspur (6a) um mehr als einen vorbestimmten Grenzwert abweicht.

5. Verfahren nach einem der vorhergehenden Ansprüche, **dadurch gekennzeichnet, dass** das Transportfahrzeug (9) ein Ortsbestimmungssystem (7) und ein automatisiertes Lenksystem (17) umfasst, wobei das Lenksystem (17) das Transportfahrzeug (9) entlang der übermittelten Fahrspur (6a) lenkt.

6. Verfahren nach einem der Ansprüche 1 bis 4, **dadurch gekennzeichnet, dass** das Transportfahrzeig (9) ein Ortsbestimmungssystem (7) umfasst und die übermittelte Fahrspur (6a) einem Fahrer des Transportfahrzeugs (9) visuell angezeigt wird.

7. Verfahren nach einem der vorhergehenden Ansprüche, **dadurch gekennzeichnet, dass** das Transportfahrzeug (9) im Wesentlichen abweichungslos in der Fahrspur (6) des Erntefahrzeugs (1) gefahren wird.

8. Verfahren nach einem der Ansprüche 1 bis 6, **dadurch gekennzeichnet, dass** die aufgezeichnete Fahrspur (6) vor der Übermittlung an das Transportfahrzeug (9) um einen Offset (11) quer zur Fahrtrichtung versetzt wird.

9. Verfahren nach Anspruch 8, **dadurch gekennzeichnet, dass** das Erntefahrzeug (1) ein Arbeitsaggregat (3) mit einer Arbeitsbreite und eine Überladevorrichtung (10) mit einer Überladeentfernung umfasst, wobei der Offset (11) aus einer Differenz der Arbeitsbreite und der Überladeentfernung bestimmt wird.

10. System zum Überladen von Erntegut, bestehend aus einem Erntefahrzeug (1) und einem Transportfahrzeug (9), wobei das Erntefahrzeug (1) und das Transportfahrzeug (9) mit einem Ortsbestimmungssystem (7), bevorzugt einem GNSS-Empfänger, ausgestattet sind, wobei das Ortsbestimmungssystem (7) des Erntefahrzeugs (1) dazu vorgesehen und eingerichtet ist eine Fahrspur (5, 6) des Erntefahrzeugs (1) aufzuzeichnen, wobei das Erntefahrzeug (1) mit einer Überladevorrichtung (10) ausgestattet ist, wobei die Überladevorrichtung (10) dazu vorgesehen und eingerichtet ist während einer Parallelfahrt von Erntefahrzeug (1) und Transportfahrzeug (9) Erntegut vom Erntefahrzeug (1) zum Transportfahrzeug (9) zu überladen, **dadurch gekennzeichnet, dass** das Erntefahrzeug (1) und das Transportfahrzeug (9) mit jeweils einem Kommunikationssystem (8) ausgestattet sind, wobei die Kommunikationssysteme (8) dazu vorgesehen und eingerichtet sind die aufgezeichnete Fahrspur (6) an das Überladefahrzeug (9) zu übermitteln, wobei das Ortsbestimmungssystem (7) des Transportfahrzeugs (9) dazu vorgesehen und eingerichtet ist ein Abweichung eine aktuellen Position des Transportfahrzeugs (9) von der übermittelten Fahrspur (6a) zu erkennen und auszugeben.

11. System nach Anspruch 10, **dadurch gekennzeichnet, dass** das Erntefahrzeug (1) ein Mähdrescher oder ein Feldhäcksler (2) ist.

12. System nach einem der Ansprüche 10 oder 11, **dadurch gekennzeichnet, dass** das Transportfahrzeug (9) ein automatisiertes Lenksystem umfasst, wobei das Lenksystem mit dem Ortsbestimmungssystem (7) des Transportfahrzeugs (9) verbunden ist, wobei die Ausgabe des Ortsbestimmungssystems (7) des Transportfahrzeugs (9) an das Lenksystem weitergeleitet wird.

## Claims

1. Method for transferring harvested crop from a harvesting vehicle (1) to a transport vehicle (9),
wherein the harvesting vehicle (1) travels along a plurality of substantially parallel tracks (6),
wherein the lane (6) of the harvesting vehicle (1) is recorded during the journey,
wherein the harvesting vehicle (1) picks up crop material during the journey,
wherein the transport vehicle (9) is driven parallel to the harvesting vehicle (1) and during the parallel drive of the harvesting vehicle (1) and transport vehicle (9) the crop material is overloaded from the harvesting vehicle (1) onto the transport vehicle (9),
**characterised in that** the recorded lane (6) is transmitted to the transport vehicle (9), wherein the transport vehicle (9) is driven substantially along the transmitted lane (6).

2. Method according to claim 1, **characterised in that** a monitoring system monitors the relative position of the harvesting vehicle (1) and the transport vehicle (9), the monitoring system outputting a speed change specification to the harvesting vehicle (1) and/or the transport vehicle (9) if the parallelism of the harvesting vehicle (1) and the transport vehicle (9) deviates by more than a predetermined limit value.

3. Method according to one of the preceding claims, **characterised in that** the harvesting vehicle is equipped with a location determination system (7), preferably a GNSS receiver, and the lane (5, 6) is generated from the location data determined by the location determination system (7).

4. Method according to claim 3 **characterised in that** the location determination system (7) compares the current lane (6) with a transmitted lane (6a) and issues a warning if the parallelism of the current lane (6) deviates from the transmitted lane (6a) by more than a predetermined limit value.

5. Method according to one of the preceding claims, **characterised in that** the transport vehicle (9) comprises a location determination system (7) and an automated steering system (17), wherein the steering system (17) steers the transport vehicle (9) along the transmitted lane (6a).

6. Method according to one of the claims 1 to 4 **characterised in that** the transport vehicle (9) comprises a location determination system (7) and the transmitted lane (6a) is visually displayed to a driver of the transport vehicle (9).

7. Method according to one of the preceding claims, **characterised in that** the transport vehicle (9) is driven substantially without deviation in the lane (6) of the harvesting vehicle (1).

8. Method according to one of the claims 1 to 6 **characterised in that** the recorded lane (6) is offset by an offset (11) transverse to the direction of travel before being transmitted to the transport vehicle (9).

9. Method according to claim 8, **characterised in that** the harvesting vehicle (1) comprises a working unit (3) with a working width and an overloading device (10) with an overloading distance, wherein the offset (11) is determined from a difference between the working width and the overloading distance.

10. System for overloading crops, comprising a harvesting vehicle (1) and a transport vehicle (9), wherein the harvesting vehicle (1) and the transport vehicle (9) are equipped with a location determination system (7), preferably a GNSS receiver, wherein the location determination system (7) of the harvesting vehicle (1) is provided and arranged to record a lane (5, 6) of the harvesting vehicle (1), wherein the harvesting vehicle (1) is equipped with an overloading device (10), wherein the overloading device (10) is provided and arranged to overload crop material from the harvesting vehicle (1) to the transport vehicle (9) during a parallel journey of the harvesting vehicle (1) and the transport vehicle (9), **characterised in that** the harvesting vehicle (1) and the transport vehicle (9) are each equipped with a communication system (8), the communication systems (8) being provided and set up to transmit the recorded lane (6) to the transfer vehicle (9), the location determination system (7) of the transport vehicle (9) being provided and set up to detect and output a deviation of a current position of the transport vehicle (9) from the transmitted lane (6a).

11. System according to claim 10 **characterised in that** the harvesting vehicle (1) is a combine harvester or a forage harvester (2).

12. System according to one of the claims 10 or 11 **characterised in that** the transport vehicle (9) comprises an automated steering system, wherein the steering system is connected to the location determination system (7) of the transport vehicle (9), wherein the output of the location determination system (7) of the transport vehicle (9) is forwarded to the steering system.

## Revendications

1. Procédé de transfert de récolte depuis un véhicule de récolte (1) sur un véhicule de transport (9),
selon lequel le véhicule de récolte (1) parcourt une multitude de couloirs de passage (6) sensiblement parallèles,
selon lequel le couloir de passage (6) du véhicule de récolte (1) est enregistré pendant le déplacement,
selon lequel le véhicule de récolte (1) ramasse la récolte pendant le déplacement,
selon lequel le véhicule de transport (9) est déplacé parallèlement au véhicule de récolte (1) et, pendant le déplacement parallèle du véhicule de récolte (1) et du véhicule de transport (9), la récolte est transférée du véhicule de récolte (1) sur le véhicule de transport (9),
**caractérisé en ce que** le couloir de passage (6) enregistré est transmise au véhicule de transport (9),
sachant que le véhicule de transport (9) est déplacé essentiellement le long du couloir de passage (6) transmis.

2. Procédé selon la revendication 1, **caractérisé en ce qu'**un système de surveillance surveille la position relative du véhicule de récolte (1) et du véhicule de transport (9), le système de surveillance délivrant une consigne de modification de vitesse au véhicule de récolte (1) et/ou au véhicule de transport (9), lorsque le parallélisme du véhicule de récolte (1) et du véhicule de transport (9) s'écarte d'une valeur supérieure à une valeur limite prédéfinie.

3. Procédé selon l'une des revendications précédentes, **caractérisé en ce que** le véhicule de récolte est équipé d'un système de localisation (7), de préférence d'un récepteur GNSS, et que le couloir de passage (5, 6) est généré à partir des données de position déterminées par le système de localisation (7).

4. Procédé selon la revendication 3, **caractérisé en ce que** le système de localisation (7) compare le couloir de passage (6) actuel avec un couloir de passage (6a) transmis et émet un avertissement lorsque le parallélisme du couloir de passage (6) actuel s'écarte du couloir de passage (6a) transmis d'une valeur supérieure à une valeur limite prédéfinie.

5. Procédé selon l'une des revendications précédentes, **caractérisé en ce que** le véhicule de transport (9) comprend un système de localisation (7) et un système de guidage (17) automatisé, le système de guidage (17) guidant le véhicule de transport (9) le long du couloir de passage (6a) transmis.

6. Procédé selon l'une des revendications 1 à 4, **caractérisé en ce que** le véhicule de transport (9) comprend un système de localisation (7), et le couloir de passage (6a) transmis est indiqué visuellement à un conducteur du véhicule de transport (9).

7. Procédé selon l'une des revendications précédentes, **caractérisé en ce que** le véhicule de transport (9) est piloté sensiblement sans écarts dans le couloir de passage (6) du véhicule de récolte (1).

8. Procédé selon l'une des revendications 1 à 6, **caractérisé en ce qu'**avant la transmission au véhicule de transport (9), le couloir de passage (6) enregistré est déplacé d'un décalage (11), perpendiculairement à la direction de déplacement.

9. Procédé selon la revendication 8, **caractérisé en ce que** le véhicule de récolte (1) comprend une unité de travail (3), dotée d'une largeur de travail, et un dispositif de transfert (10) doté d'une distance de transfert, le décalage (11) étant déterminé à partir d'une différence entre la largeur de travail et la distance de transfert.

10. Système de transfert de récolte constitué d'un véhicule de récolte (1) et d'un véhicule de transport (9), le véhicule de récolte (1) et le véhicule de transport (9) étant équipés d'un système de localisation (7), de préférence d'un récepteur GNSS, le système de localisation (7) du véhicule de récolte (1) étant prévu et conçu pour enregistrer un couloir de passage (6) du véhicule de récolte (1), le véhicule de récolte (1) étant équipé d'un dispositif de transfert (10), le dispositif de transfert (10) étant prévu et conçu pour transférer la récolte depuis le véhicule de récolte (1) vers le véhicule de transport (9), pendant un déplacement parallèle du véhicule de récolte (1) et du véhicule de transport (9), **caractérisé en ce que** le véhicule de récolte (1) et le véhicule de transport (9) sont équipés chacun d'un système de communication (8), les systèmes de communication (8) étant prévus et conçus pour transmettre le couloir de passage (6) enregistré au véhicule de transfert (9), le système de localisation (7) du véhicule de transport (9) étant prévu et conçu pour détecter et délivrer un écart d'une position actuelle du véhicule de transport (9) par rapport au couloir de passage (6a) transmis.

11. Système selon la revendication 10, **caractérisé en ce que** le véhicule de récolte (1) est une moissonneuse-batteuse ou une récolteuse-hacheuse (2).

12. Système selon l'une des revendications 10 ou 11, **caractérisé en ce que** le véhicule de transport (9) comprend un système de guidage automatisé, le système de guidage étant relié au système de localisation (7) du véhicule de transport (9), la sortie du système de localisation (7) du véhicule de transport (9) étant transmise au système de guidage.
